(19) Europäisches Patentamt / European Patent Office / Office européen des brevets

(11) **EP 3 983 779 B1**

(12) **EUROPÄISCHE PATENTSCHRIFT**

(45) Veröffentlichungstag und Bekanntmachung des Hinweises auf die Patenterteilung:
**31.07.2024   Patentblatt 2024/31**

(21) Anmeldenummer: **20746540.2**

(22) Anmeldetag: **10.06.2020**

(51) Internationale Patentklassifikation (IPC):
**G01M 17/06** (2006.01)       **B60W 50/00** (2006.01)

(52) Gemeinsame Patentklassifikation (CPC):
**G01M 17/06; B60W 50/0097**

(86) Internationale Anmeldenummer:
**PCT/AT2020/060241**

(87) Internationale Veröffentlichungsnummer:
**WO 2020/247999 (17.12.2020 Gazette 2020/51)**

(54) **VERFAHREN UND VORRICHTUNG ZUR VORAUSSCHAUENDEN FAHRZEUGKONTROLLE**

METHOD AND APPARATUS FOR PREDICTIVE VEHICLE CONTROL

PROCÉDÉ ET DISPOSITIF DE CONTRÔLE PRÉVISIONNEL DE VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2019   AT 505322019**

(43) Veröffentlichungstag der Anmeldung:
**20.04.2022   Patentblatt 2022/16**

(73) Patentinhaber: **AVL List GmbH**
**8020 Graz (AT)**

(72) Erfinder:
• **GIGERL, Hans Peter**
  **8061 Gutenberg-Stenzengreith (AT)**

• **LEMMERER, David**
  **8160 Weiz (AT)**
• **JANY-LUIG, Johannes**
  **8046 Graz (AT)**

(74) Vertreter: **Mathys & Squire**
**Theatinerstraße 7**
**80333 München (DE)**

(56) Entgegenhaltungen:

| | |
|---|---|
| EP-A1- 2 420 423 | WO-A1-2013/095237 |
| WO-A1-2013/095242 | DE-A1- 102014 012 319 |
| US-A1- 2011 313 647 | US-A1- 2018 154 898 |

**Beschreibung**

Die vorliegende Erfindung betrifft ein Verfahren zum Betreiben eines Fahrermodells zum Kontrollieren eines Fahrzeugs, eine Kontrollvorrichtung zum Betreiben eines Fahrermodells zum Kontrollieren eines Fahrzeugs, die Verwendung der Kontrollvorrichtung zur Durchführung eines Testlaufs für ein Fahrzeug und ein Com puterprogram m produkt.

Insbesondere zum Durchführen von Fahrzeugtestläufen werden Fahrzeuge gemäß einer vorgegebenen Fahrzeuggeschwindigkeitsanforderung betrieben. Dabei dient die Fahrzeuggeschwindigkeitsanforderung als unabhängige Variable, anhand derer ein Verhalten des Fahrzeugs, wie bspw. eine Schadstoffemission, beurteilt wird.

Im Stand der Technik sind Fahrermodelle, d.h. mathematische Modelle zum Simulieren eines Verhaltens eines Fahrers beim Steuern eines Fahrzeugs beschrieben, die einen Unterschied zwischen einer aktuellen Fahrzeuggeschwindigkeitsanforderung und einer aktuellen Fahrzeuggeschwindigkeit berechnen. Diese Fahrermodelle versuchen bspw. unter Verwendung eines PI-Reglers einen berechneten Unterschied zwischen einer aktuellen Fahrzeuggeschwindigkeitsanforderung und einer aktuellen Fahrzeuggeschwindigkeit zu minimieren. Derartige Fahrermodelle führen zu einem auf lediglich eine aktuelle Fahrzeuggeschwindigkeitsanforderung ausgerichteten Betrieb eines jeweiligen Fahrzeugs, der ein Verhaltens eines menschlichen Fahrers beim Steuern eines Fahrzeugs nur bedingt abbildet.

Beispielsweise offenbart die internationale Patentanmeldung WO2013/095237 A1 ein Verfahren und ein Modul zur Steuerung der Geschwindigkeit eines Fahrzeugs auf der Grundlage seiner prognostizierten Geschwindigkeit.

Das Dokument WO2013/095242 A1 offenbart ein Verfahren und ein Modul zur Ermittlung mindestens eines Referenzwertes, der angibt, wie die Geschwindigkeit eines Fahrzeugs zu beeinflussen ist und der zur Steuerung mindestens eines Regelsystems des Fahrzeugs verwendet werden kann.

Weiter offenbart das Dokument EP2420423 A1 ein Verfahren zum Vorgeben einer Drehzahl einer Antriebsmaschine eines Antriebssystems umfassend zumindest die Antriebsmaschine und eine hydrostatische Antriebseinheit.

Insbesondere führt eine Kontrolle eines Fahrzeugs mittels eines Fahrermodells, das lediglich auf eine aktuelle Fahrzeuggeschwindigkeitsanforderung hin optimiert ist, zu häufigen Beschleunigungs- und Verzögerungsvorgängen, die wiederum zu einem gegenüber einem Betrieb durch einen menschlichen Fahrer erhöhten Kraftstoffverbrauch und, dadurch bedingt, erhöhten Schadstoffausstoß führen.

Aufgabe der vorliegenden Erfindung ist es, der voranstehend beschriebenen Problematik zumindest teilweise Rechnung zu tragen. Insbesondere ist es eine Aufgabe der vorliegenden Erfindung, einen Betrieb eines Fahrzeugs unter Verwendung eines Fahrermodells zu ermöglichen, der eine maximale Kraftstoff- bzw. Schadstoffeffizienz ermöglicht.

Die voranstehende Aufgabe wird durch die Patentansprüche gelöst. Insbesondere wird die voranstehende Aufgabe durch das Verfahren, die Kontrollvorrichtung sowie das Computerprogrammprodukt gemäß dem jeweiligen Gegenstand der unabhängigen Patentansprüche gelöst.

Weitere Vorteile der Erfindung ergeben sich aus den Unteransprüchen, der Beschreibung und den Zeichnungen. Dabei gelten Merkmale und Details, die im Zusammenhang mit dem Verfahren beschrieben sind, selbstverständlich auch im Zusammenhang mit der erfindungsgemäßen Kontrollvorrichtung und jeweils umgekehrt, sodass bezüglich der Offenbarung zu den einzelnen Erfindungsaspekten stets wechselseitig Bezug genommen wird bzw. werden kann.

Gemäß eines ersten Aspekts der vorliegenden Erfindung wird ein Verfahren zum Betreiben eines Fahrermodells zum Kontrollieren eines Fahrzeugs auf einem Prüfstand vorgestellt. Das erfindungsgemäße Verfahren umfasst das Ermitteln einer vorgegebenen Zielleistungsverlaufskurve für das Fahrzeug, welche sich zeitlich ändert, aus einem abzufahrenden Testzyklus, das Bestimmen eines Toleranzbandes für die Zielleistungsverlaufskurve, wobei das Toleranzband durch eine obere Grenzlinie und eine untere Grenzlinie beschränkt wird, die obere Grenzlinie anhand eines Verlaufs der Zielleistungsverlaufskurve zuzüglich eines vorgegebenen oberen Toleranzwerts bestimmt wird, und wobei die untere Grenzlinie anhand des Verlaufs der Zielleistungsverlaufskurve abzüglich eines vorgegebenen unteren Toleranzwerts bestimmt wird. Weiterhin umfasst das erfindungsgemäße Verfahren das Bestimmen einer Erwartungskennlinie für eine in der Zukunft zu erwartende Leistung des Fahrzeugs durch Extrapolieren einer Leistungsentwicklung des Fahrzeugs bei einer aktuellen Einstellung des Fahrzeugs für ein Vorhersagefenster mit einer vorgegebenen zeitlichen Länge, und das Freigeben eines Kontrollbefehls durch das Fahrermodell zum Ändern einer Einstellung des Fahrzeugs für den Fall, dass die Erwartungskennlinie zumindest eine der oberen Grenzlinie und der unteren Grenzlinie des Toleranzbandes innerhalb des zeitlichen Vorhersagfensters schneidet.

Bei der Anwendung eines Fahrermodells im Sinne der vorliegenden Erfindung auf einem Prüfstand wird insbesondere die Geschwindigkeit des Fahrzeugs betrachtet. Je nach abzufahrendem Testzyklus erfolgt hierzu die Vorgabe einer Soll-Geschwindigkeit, welche sich zeitlich ändert und damit auch als Soll-Geschwindigkeitsverlauf oder Zielleistungsverlaufskurve beschrieben werden kann. Um den Testzyklus zu absolvieren erfolgt eine Kontrolle der Geschwindigkeit des Fahrzeugs mittels dessen Fahrpedal und dessen Bremspedal. Wie im Testbetrieb dient dabei eine Betätigung des Fahrpedals einer Erhöhung der Ist-Geschwindigkeit in quantitativer Weise und eine Betätigung des Bremspedals einer entsprechenden Reduktion der Ist-Geschwindigkeit in quantitativer Weise. Bei der Durchführung einer solchen Geschwindigkeitskontrolle soll der Verlauf der Ist-Geschwindigkeit in Form einer Geschwindigkeits-Linie dem Verlauf der Soll-Geschwindigkeit so genau wie möglich folgen. Insbesondere sind Grenzabweichungen vorgegeben, zum Beispiel in Form einer unteren Grenzlinie und einer oberen Grenzlinie, welche eine maximale und nicht zu überschreitende Abweichung von der Soll-Geschwindigkeit darstellen. Der Verlauf der Soll-Geschwindigkeit und der Verlauf der Ist-Geschwindigkeit sind daher nicht deckungsgleich, sondern unterscheiden sich voneinander. Je nach Qualität der Kontrollfunktion und/oder des Fahrermodells ist der Unterschied zwischen den beiden Verläufen unterschiedlich groß.

Unter dem Begriff "Kontrollieren" ist im Kontext der vorliegenden Offenbarung ein Steuerungs- bzw. Regelungsprozess zu verstehen.

Unter "Freigeben eines Kontrollbefehls" ist im Kontext der vorliegenden Offenbarung ein Prozess zu verstehen, bei dem eine Veränderung einer Einstellung eines Fahrzeugs durch einen bereitgestellten Kontrollbefehl, wie bspw. ein Betätigen eines Bremspedals, erlaubt und entsprechend umgesetzt wird. Insbesondere ist unter "Freigeben eines Kontrollbefehls" eine Ausgabe eines Kontrollbefehls auf einer Ausgabeeinheit, wie bspw. einer Anzeige und/oder einem Lautsprecher, zur Umsetzung durch einen Fahrer zu verstehen.

Unter einer "Zielleistungsverlaufskurve" ist im Kontext der vorliegenden Offenbarung eine vorgegebene Abfolge von durch ein Fahrzeug bereitzustellenden Fahrleistungen, wie bspw. eine Fahrzeuggeschwindigkeit, eine Motorleistung, eine Bremsleistung, eine Beschleunigungsleistung und/oder eine Verzögerungsleistung zu verstehen. Eine Zielleistungsverlaufskurve wird insbesondere in einem Diagramm bereitgestellt, das sich auf einer ersten Achse über die Zeit und auf einer zweiten Achse über eine Fahrleistung aufspannt.

Unter einem "Toleranzband" ist im Kontext der vorliegenden Offenbarung ein Wertebereich zu verstehen, der sich proportional zu einer jeweiligen Zielleistungsverlaufskurve ändert, und der nach oben durch eine obere Grenzlinie und nach unten durch eine untere Grenzlinie begrenzt wird. Dabei verlaufen die obere Grenzlinie und die untere Grenzlinie insbesondere in definierten zeitlichen Abweichungen bzw. "Offsets" und geschwindigkeitsabhängigen Abweichungen bzw. "Offsets" zu der Zielleistungsverlaufskurve.. Der Toleranzwert kann bspw. von einem Nutzer eines jeweiligen Fahrzeugs vorgegeben werden. Insbesondere kann ein erster Toleranzwert für die obere Grenzlinie und ein zweiter Grenzwert für die untere Grenzlinie vorgegeben werden. Es ist selbstverständlich auch denkbar, dass der erste Toleranzwert und der zweite Toleranzwert betragsmäßig identisch sind.

Unter einer "Erwartungskennlinie" ist im Kontext der vorliegenden Offenbarung eine in der Zukunft zu erwartende Leistung bzw. ein "vorausschauendes Verhalten" eines jeweiligen Fahrzeugs zu verstehen. Eine Erwartungskennlinie wird durch Extrapolieren einer Leistungsentwicklung des Fahrzeugs bei einer aktuellen Einstellung des Fahrzeugs für ein Vorhersagefenster mit einer vorgegebenen zeitlichen Länge bestimmt. Dies bedeutet, dass innerhalb eines vorgegebenen Vorhersagefensters, d.h. eines Zeitfensters mit einer vorgegebenen Länge von bspw. zwischen 2 Sekunden und 20 Sekunden, bevorzugt zwischen 2 Sekunden und 10 Sekunden, weiter bevorzugt zwischen 2 Sekunden und 5 Sekunden, insbesondere bevorzugt von 4 Sekunden, die Leistungsentwicklung des Fahrzeugs vorhergesagt bzw. aus zumindest einem aktuellen Leistungswert und ggf. in der Vergangenheit ermittelten historischen Leistungswerten des Fahrzeugs, bestimmt wird. Da die Leistungsentwicklung des Fahrzeugs im Wesentlichen dem Verlauf der Zielleistungsverlaufskurve entspricht, liegt ein Ursprung der Erwartungskennlinie in der Regel innerhalb des Toleranzbandes, d.h. zwischen der unteren Grenzlinie und der oberen Grenzlinie. Insbesondere überlagert die Leistungsentwicklung des Fahrzeugs die Zielleistungsverlaufskurve.

Unter einer "Einstellung eines Fahrzeugs" ist im Kontext der vorliegenden Offenbarung eine Konfiguration eines Fahrzeugs, wie bspw. ein Betrieb eines Fahrzeugs mit einer vorgegebenen Pedalstellung, zu verstehen.

Das vorgestellte Verfahren dient insbesondere zum teilautomatischen Durchführen eines Testlaufs für ein Fahrzeug, bei dem ausgewählte Kontrollbefehle zum Kontrollieren des Fahrzeugs durch einen Fahrer von einem Fahrermodell selektiv freigegeben bzw. vorgegeben werden.

Insbesondere dient das vorgestellte Verfahren zum vollautomatischen Durchführen eines Testlaufs für ein Fahrzeug, bei dem ausgewählte Kontrollbefehle zum Kontrollieren des Fahrzeugs durch eine Fahrzeugkontrollvorrichtung von einem Fahrermodell selektiv freigegeben werden.

Das vorgestellte Verfahren basiert auf einem Toleranzband, mittels dessen ein zukünftiges Fahrzeugverhalten und zukünftig bereitzustellende Fahrleistungen in einen Prozess zum Kontrollieren des Fahrzeugs einbezogen werden. Entsprechend ermöglicht das erfindungsgemäß vorgesehene Toleranzband eine "vorausschauende" Kontrolle eines Fahrzeugs, bei der ein Auftreten von in kurzem zeitlichen Abstand, bspw. innerhalb einer Sekunde einzustellende gegenläufige Kontrollbefehle, wie bspw. beschleunigen und bremsen, reduziert wird. Entsprechend ermöglicht das vorgestellte Verfahren einen besonders gleichmäßigen und, dadurch bedingt, effizienten Betrieb eines Fahrzeugs im Hinblick auf Kraftstoffverbrauch und Schadstoffausstoß.

Da insbesondere bei einem Testzyklus, wie bspw. einem Prüfstandlauf oder einem Test zum Ermitteln von Emissionen im praktischen Betrieb, eine Zielleistungsverlaufskurve, d.h. ein Verlauf von durch ein Fahrzeug zu erbringenden Fahrleistungen über ein vorgegebenes Zeitfenster hinweg vorgegeben ist, sind bezogen auf einen aktuellen Zeitpunkt innerhalb des Zeitfensters stets jeweilige in der Zukunft zu erbringende Fahrleistungen bekannt.

Um häufige Anpassungsvorgänge durch Bereitstellen von Kontrollbefehlen in Reaktion auf kleinste Änderungen einer jeweiligen Zielleistungsverlaufskurve zu vermeiden, sieht das vorgestellte Verfahren vor, dass lediglich dann ein Kontrollbefehl zur Änderung einer aktuellen Fahrleistung eines jeweiligen Fahrzeugs freigegeben wird, wenn eine Erwartungskennlinie des Fahrzeugs ein Toleranzband der Zielleistungsverlaufskurve, bspw. an dessen oberer Grenzlinie und/oder dessen unterer Grenzlinie schneidet. Dabei wird ein "Vorhersagehorizont" anhand eines Vorhersagefensters mit vorgegebener Dauer bzw. vorgegebener zeitlicher Länge verwendet, innerhalb dessen ein Auftreten eines Schnittpunkts der Erwartungskennlinie und des Toleranzbandes zu einer Freigabe eines Kontrollbefehls führt. Dies bedeutet insbesondere, dass eine aktuelle Einstellung des Fahrzeugs beibehalten wird, wenn sich die Erwartungskennlinie und das Toleranzband innerhalb des Vorhersagefensters nicht schneiden.

Selbstverständlich kann sich die Dauer bzw. die Länge des erfindungsgemäß vorgesehenen Vorhersagefensters gemäß einem vorgegebenen mathematischen Zusammenhang in Abhängigkeit einer aktuell von dem Fahrzeug bereitgestellten bzw. bereitzustellenden Fahrleistung ändern.

Das erfindungsgemäß vorgesehene Vorhersagefenster kann dynamisch, d.h. insbesondere kontinuierlich mit fortschreitender Zeit bzw. "online", aktualisiert werden. Dies bedeutet, dass das Vorhersagefenster sich entlang der Zeitachse beim Abfahren einer jeweiligen Zielleistungsverlaufskurve mit einem aktuellen Zeitpunkt mitbewegt. Entsprechend erstreckt sich das Vorhersagefenster stets von einem aktuellen Zeitpunkt bzw. einem Zeitpunkt in der Vergangenheit für eine vorgegebene Dauer bis zu einem entsprechenden Zeitpunkt in der Zukunft.

Weiterhin kann vorgesehen sein, dass das Vorhersagefenster eine variable Dauer bzw. zeitliche Länge hat. Dabei kann die zeitliche Länge des Vorhersagefensters bspw. in Abhängigkeit eines Zustands des Fahrzeugs, insbesondere in Abhängigkeit einer aktuellen Geschwindigkeit des Fahrzeugs gewählt werden.

Weiterhin kann vorgesehen sein, dass das Ändern von Einstellungen eines jeweiligen Fahrzeugs für den Fall, dass die Erwartungskennlinie die obere Grenzlinie schneidet, umfasst, dass ein erster Kontrollbefehl freigegeben wird, der eine Reduktion einer Leistungsabgabe des Fahrzeugs bedingt und das Ändern der Einstellungen des Fahrzeugs für den Fall, dass die Erwartungskennlinie die untere Grenzlinie schneidet, umfasst, dass ein zweiter Kontrollbefehl freigegeben wird, der eine Erhöhung einer Leistungsabgabe des Fahrzeugs bedingt.

Durch eine Erhöhung einer Leistungsabgabe eines jeweiligen Fahrzeugs für den Fall, dass eine aktuelle Erwartungskennlinie eine jeweilige untere Grenzlinie innerhalb eines jeweiligen Vorhersagefensters schneidet bzw. eine Reduktion einer Leistungsabgabe des Fahrzeugs für den Fall, dass die Erwartungskennlinie eine jeweilige obere Grenzlinie innerhalb des Vorhersagefensters schneidet, wird die Leistungsabgabe des Fahrzeugs stets innerhalb des erfindungsgemäßen Toleranzbandes gehalten.

Weiterhin kann vorgesehen sein, dass ein jeweiliger erster Kontrollbefehl ein Bremssystem eines jeweiligen Fahrzeugs aktiviert und/oder eine Reduktion einer Leistungsabgabe des Antriebs bewirkt, und ein jeweiliger zweiter Kontrollbefehl einen Antrieb des Fahrzeugs zum Bereitstellen einer bzgl. einer aktuellen Leistungsabgabe höheren Leistungsabgabe konfiguriert.

Durch Freigeben jeweiliger Kontrollbefehle bspw. zum Aktivieren eines Bremssystems eines Fahrzeugs und/oder zum Reduzieren einer Leistungsabgabe eines Antriebs, bspw. durch ein "Lupfen" eines Fahrpedals, bzw. zum Erhöhen einer Leistungsabgabe eines Antriebs des Fahrzeugs kann einem Fahrer bzw. einer Fahrzeugkontrollvorrichtung eine Veränderung einer Einstellung des Fahrzeugs ermöglicht werden, der bzw. die das Fahrzeug gemäß dem vorgestellten Verfahren besonders effizient betreibt. Dies bedeutet, dass insbesondere lediglich solche Kontrollbefehle freigegeben werden, die gemäß dem vorgestellten Verfahren erforderlich sind. Insbesondere kann vorgesehen sein, dass Kontrollbefehle, die gemäß dem vorgestellten Verfahren nicht erforderlich sind, blockiert bzw. nicht freigegeben werden.

Zum Freigeben eines Kontrollbefehls kann ein Pedalkontrollgerät von einem blockierten bzw. nicht freigegebenen Betrieb in einen freigegebenen Betrieb geschaltet werden.

Weiterhin kann vorgesehen sein, dass für einen Wechsel zwischen einem ersten Kontrollbefehl, der ein Bremssystem eines jeweiligen Fahrzeugs aktiviert, und einem zweiten Kontrollbefehl, der einen Antrieb des Fahrzeugs zum Bereitstellen einer bzgl. einer aktuellen Leistungsabgabe höheren Leistungsabgabe konfiguriert, ein Fahrpedal und ein Bremspedal des Fahrzeugs sich in einer Nullstellung befinden müssen.

Durch eine Vorgabe für eine zwischen zwei Kontrollbefehlen mit konträren Effekten, wie bspw. beschleunigen und bremsen, vorgesehene Nullstellung jeweiliger Pedale bzw. Eingabemittel eines Fahrzeugs kann eine unnötig häufige Änderung von Einstellungen des Fahrzeugs vermieden werden. Dazu können bspw. jeweilige zweite Kontrollbefehle zum Erhöhen einer Leistungsabgabe geblockt werden, wenn sich ein Bremspedal seit seiner letzten Aktivierung gemäß eines ersten Kontrollbefehls nicht in einer Nullstellung befunden hat.

Es kann weiterhin vorgesehen sein, dass für den Fall, dass die erfindungsgemäß vorgesehene Erwartungskennlinie mindestens eine der oberen Grenzlinie und der unteren Grenzlinie schneidet, ein Gewichtungsfaktor ermittelt wird, der sich in Abhängigkeit eines zeitlichen Abstands eines Schnittpunkts der Erwartungskennlinie und der oberen Grenzlinie oder der unteren Grenzlinie zu einem aktuellen Zeitpunkt ändert.

Mittels eines Gewichtungsfaktors, der sich in Abhängigkeit eines zeitlichen Abstands eines Schnittpunkts der Erwartungskennlinie und der oberen Grenzlinie oder der unteren Grenzlinie zu einem aktuellen Zeitpunkt ändert, kann für den Fall, dass innerhalb eines jeweiligen Vorhersagefensters mehrere Schnittpunkte auftreten, ein jeweiliger prioritär zu verwendender Schnittpunkt ermittelt werden. Dazu kann bspw. vorgesehen sein, dass ein am nächsten zu einem aktuellen Zeitpunkt auftretender Schnittpunkt zu einer hohen Priorisierung und ein besonders weit von dem aktuellen Zeitpunkt entfernter Schnittpunkt zu einer niedrigen Priorisierung führt, so dass der hoch priorisierte Schnittpunkt zuerst bzw. vor dem niedrig priorisierten Schnittpunkt zum Freigeben eines Kontrollbefehls gemäß dem vorgestellten Verfahren verwendet wird.

Es kann weiterhin vorgesehen sein, dass eine jeweilige Erwartungskennlinie anhand von historischen Leistungsdaten eines Fahrzeugs in einem vorgegebenen Zeitfenster ausgehend von einem aktuellen Zeitpunkt bestimmt wird, und die Erwartungskennlinie unter der Annahme, dass eine Leistungsabgabe und/oder ein Wert einer Beschleunigung des Fahrzeugs in dem Vorhersagefenster konstant bleibt, bestimmt wird.

Unter Verwendung von historischen Leistungsdaten, die bspw. in einem Bestimmungsfenster ermittelt werden, das sich in einem Bereich von wenigen Sekunden, bevorzugt 5 Sekunden, weiter bevorzugt 4 Sekunden, insbesondere bevorzugt 0,2 Sekunden, vor einem aktuellen Zeitpunkt bis zu dem aktuellen Zeitpunkt erstreckt, kann ein Verhalten des Fahrzeugs verlässlich extrapoliert werden. Dabei kann eine Leistungsabgabe des Fahrzeugs bzw. eines Antriebs des Fahrzeugs, eine positive oder negative Beschleunigung des Fahrzeugs, eine Drehmomentabgabe des Fahrzeugs bzw. des Antriebs des Fahrzeugs und/oder jeder weitere technisch geeignete Parameter zum Bestimmen eines Bewegungsmusters des Fahrzeugs verwendet werden, um die Erwartungskennlinie zu extrapolieren.

Es kann weiterhin vorgesehen sein, dass das Vorhersagefenster kontinuierlich aktualisiert wird, wobei innerhalb des Vorhersagefensters in einem ersten Prüfschritt kontinuierlich geprüft wird, ob die Erwartungskennlinie die obere Grenzlinie schneidet und in einem zweiten Prüfschritt kontinuierlich geprüft wird, ob die Erwartungskennlinie die untere Grenzlinie schneidet.

Mittels eines ersten Prüfschritts, in dem geprüft wird, ob die Erwartungskennlinie die obere Grenzlinie schneidet und eines zweiten Prüfschritts in dem geprüft wird, ob die Erwartungskennlinie die untere Grenzlinie schneidet, können Vorgänge zum Freigeben eines ersten Kontrollbefehls zum Verzögern eines Fahrzeugs oder zum Freigeben eines zweiten Kontrollbefehls zum Erhöhen einer Leistungsabgabe unabhängig voneinander durchgeführt werden. Daher können entsprechende Aktuatoren, wie bspw. ein Fahrpedal oder ein Bremspedal unabhängig voneinander, d.h. ggf. gleichzeitig betätigt werden.

Insbesondere kann es vorgesehen sein, dass Vorgänge zum Freigeben eines ersten Kontrollbefehls zum Verzögern eines Fahrzeugs bevorzugt durchgeführt werden, so dass bspw. wenn ein erster Kontrollbefehl zum Verzögern des Fahrzeugs und ein zweiter Kontrollbefehl zum Erhöhen einer Leistungsabgabe eines Antriebs des Fahrzeugs freigegeben werden sollen, lediglich der erste Kontrollbefehl tatsächlich freigegeben wird.

Es kann weiterhin vorgesehen sein, dass in einem jeweiligen ersten Prüfschritt zusätzlich geprüft wird, ob zukünftige durch eine Zielleistungsverlaufskurve vorgegebene Leistungsanforderungen innerhalb eines Vorhersagefensters sich kontinuierlich einem Nullwert nähern, und für den Fall, dass sich die zukünftigen durch die Zielleistungsverlaufskurve vorgegebenen Leistungsanforderungen innerhalb des Vorhersagefensters kontinuierlich dem Nullwert nähern, ein Kontrollbefehl freigegeben wird, der das Fahrzeug gemäß einem vorgegebenen Prozedere zum Stillstand bringt.

Um eine unnötige Leistungsabgabe zu vermeiden, kann ein vorgegebenes Prozedere vorgesehen sein, das ein Fahrzeug zum Stillstand bringt. Dazu kann bspw. eine Sequenz aus Bremsaktivität und/oder Rekuperation vorgesehen sein. Zum Erkennen einer Fahrsituation, die sich zum Einleiten eines solchen Prozederes eignet, kann insbesondere ein Verlauf der erfindungsgemäß vorgesehenen Zielleistungsverlaufskurve ausgewertet werden, so dass bei einer kontinuierlichen Abnahme jeweiliger Werte der Zielleistungsverlaufskurve ab einem aktuellen Zeitpunkt für eine vorgegebene Dauer, insbesondere für die Dauer des erfindungsgemäß vorgesehenen Vorhersagefensters, das Prozedere aktiviert wird.

In einem zweiten Aspekt betrifft die vorgestellte Erfindung eine Kontrollvorrichtung zum Steuern eines Fahrzeugs während eines Testlaufs mittels eines Fahrermodells mit mindestens einer Recheneinheit. Die Recheneinheit umfasst mindestens ein erstes Ermittlungsmodul zum Ermitteln einer vorgegebene Zielleistungsverlaufskurve welche sich zeitlich ändert, aus einem abzufahrenden Testzyklus für das Fahrzeug, ein erstes Bestimmungsmodul zum Bestimmen eines Toleranzbandes für die Zielleistungsverlaufskurve, wobei das Toleranzband durch eine obere Grenzlinie und eine untere Grenzlinie beschränkt wird, ein zweites Ermittlungsmodul zum Ermitteln der oberen Grenzlinie anhand eines Verlaufs der Zielleistungsverlaufskurve zuzüglich eines vorgegebenen oberen Toleranzwerts, ein drittes Ermittlungsmodul zum Ermitteln der unteren Grenzlinie anhand des Verlaufs der Zielleistungsverlaufskurve abzüglich eines vorgegebenen unteren Toleranzwerts, ein zweites Bestimmungsmodul zum Bestimmen einer Erwartungskennlinie für eine in der Zukunft zu erwartende Leistung des Fahrzeugs durch Extrapolieren einer Leistungsentwicklung des Fahrzeugs bei einer aktuellen Einstellung des Fahrzeugs für ein vorgegebenes zeitliches Vorhersagefenster, und ein Freigabemodul zum Freigeben eines durch das Fahrermodell zum Ändern der Einstellung des Fahrzeugs bereitzustellenden Kontrollbefehls, für den Fall, dass die Erwartungskennlinie zumindest eine der oberen Grenzlinie und der unteren Grenzlinie des Toleranzbandes innerhalb des zeitlichen Vorhersagfensters schneidet.

Damit bringt eine erfindungsgemäße Kontrollvorrichtung die gleichen Vorteile mit sich, wie sie ausführlich mit Bezug auf das erfindungsgemäße Verfahren beschrieben worden sind.

In einem dritten Aspekt betrifft die vorgestellte Erfindung die Verwendung der vorgestellten Kontrollvorrichtung zur Durchführung eines Testlaufs für ein Fahrzeug.

In einem vierten Aspekt betrifft die vorgestellte Erfindung ein Computerprogrammprodukt mit Programmcodemitteln zum Durchführen aller Schritte des vorgestellten Verfahrens, wenn das Programm auf einem Computer ausgeführt wird.

Das Computerprogrammprodukt kann als computerlesbarer Anweisungscode in jeder geeigneten Programmiersprache wie beispielsweise in JAVA oder C++ implementiert sein. Das Computerprogrammprodukt kann auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Der Anweisungscode kann einen Computer oder andere programmierbare Geräte wie bspw. Steuer- bzw. Kontrollgeräte derart programmieren, dass die gewünschten Funktionen ausgeführt werden. Ferner kann das Computerprogrammprodukt in einem Netzwerk wie beispielsweise dem Internet bereitgestellt werden bzw. sein, von dem es bei Bedarf von einem Nutzer heruntergeladen werden kann. Das Computerprogrammprodukt kann sowohl mittels eines Computerprogramms, d. h. einer Software, als auch mittels einer oder mehrerer spezieller elektronischer Schaltungen, d.h. in Hardware, oder in beliebig hybrider Form, d. h. mittels Software-Komponenten und Hardware-Komponenten, realisiert werden bzw. sein.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:

Figur 1   einen Ablauf einer möglichen Ausgestaltung des erfindungsgemäßen Verfahrens.

Figur 2   eine Visualisierung eines Toleranzbandes für eine Zielleistungsverlaufskurve mit einer Erwartungskennlinie in einem Vorhersagefenster gemäß einer möglichen Ausgestaltung des erfindungsgemäßen Verfahrens.

Figur 3   einen Ablauf einer Freigabeprozedur gemäß einer möglichen Ausgestaltung des erfindungsgemäßen Verfahrens.

Figur 4   eine Ansicht einer möglichen Ausgestaltung der erfindungsgemäßen Kontrollvorrichtung.

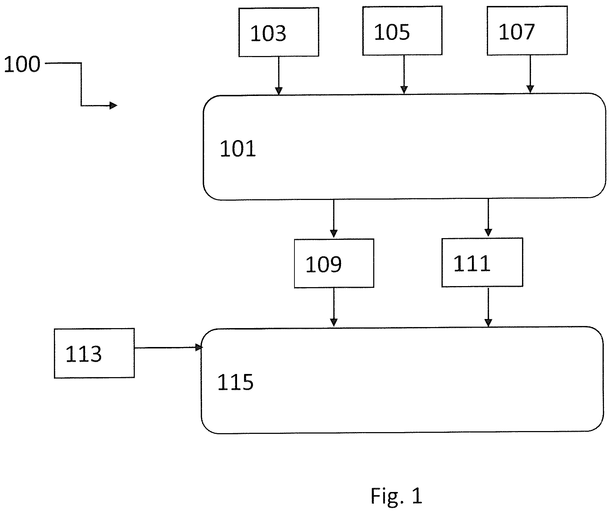

In Fig. 1 ist schematisch ein Ablauf 100 einer möglichen Ausgestaltung des erfindungsgemäßen Verfahrens zum Einstellen einer Fahrzeuggeschwindigkeit 113 als einzustellende Leistung eines Fahrzeugs dargestellt.

In einem ersten Schritt 101 werden anhand der Eingangsvariablen aktuelle Zielgeschwindigkeitsvorgabe 103, Toleranzzeit 105 und Toleranzwert bzw. Toleranzgeschwindigkeit 107 eine obere Grenzline 109 und eine untere Grenzlinie 111 eines Toleranzbandes für einen Verlauf der Zielgeschwindigkeitsvorgabe 103 bestimmt.

Es kann insbesondere vorgesehen sein, dass für jeden Zeitpunkt "t" der Zielgeschwindigkeitsvorgabe 103 ein Toleranzband wird, wobei folgendes gilt:

$$V_{tol,lower(t)} = \min\left(v(t) - \Delta v, \min\left(v(t - \Delta t, ... t, ..., t + \Delta t)\right) - \Delta v\right) \quad (1)$$

$$V_{tol,upper(t)} = \max\left(v(t) + \Delta v, \max\left(v(t - \Delta t, ... t, ..., t + \Delta t)\right) + \Delta v\right) \quad (2)$$

Dabei sind "$\Delta t$" und "$\Delta v$" vorgegebene Parameter. Der Parameter "v" entspricht einer Fahrleistung, wie bspw. einer aktuellen Geschwindigkeit 113 eines Fahrzeugs, "t" entspricht der Zeit, insbesondere in [Sekunden], "$V_{tol,lower(t)}$" entspricht einem Wert der unteren Grenzlinie 111 an der Stelle "t", "$V_{tol,upper(t)}$" entspricht einem Wert der oberen Grenzlinie 109 an der Stelle "t".

Insbesondere kann ein Toleranzband anhand von 5-dimensionalen Vektoren ermittelt werden die jeweils Werte für "$V_{tol,lower(t)}$" und "$V_{tol,upper(t)}$" an den Stellen "t", "t+1", "t+2", "t+3" und "t+4" umfassen, wobei deren Eingangsgrößen Zielleistungsverlaufswerte an den Stellen "t", "t+1", "t+2", "t+3" "t+4" und "t+6" sowie die Parameter "$\Delta t$" und "$\Delta v$" umfassen. Dabei kann "$\Delta t$" auf einen Maximalwert von "2" beschränkt sein. Insbesondere können jeweilige Werte für "$V_{tol,lower(t)}$" und "$V_{tol,supper(t)}$" an der Stelle "t+4" anhand eines Zielleistungsverlaufswerts, wie bspw. eines Zielgeschwindigkeitsverlaufswerts an der Stelle "t+6" berechnet werden.

In einem zweiten Schritt 115 wird anhand eines in Schritt 101 bestimmten Verlaufs 217 der unteren Grenzlinie 111 und eines in Schritt 101 bestimmten Verlaufs 215 der oberen Grenzlinie 109 sowie unter Einbeziehung der aktuellen Fahrzeuggeschwindigkeit 113 und der Zielgeschwindigkeitsvorgabe 103 beurteilt, ob eine Erwartungskennlinie die untere Grenzlinie 111 oder die obere Grenzlinie 109 innerhalb der Toleranzzeit 105 bzw. innerhalb eines der Toleranzzeit 105 entsprechenden Vorhersagefensters schneidet.

Für den Fall, dass die Erwartungskennlinie, die anhand der aktuellen Fahrzeuggeschwindigkeit 113 ermittelt wird, die untere Grenzlinie 111 innerhalb der Toleranzzeit 105 schneidet, wird ein erster Kontrollbefehl 315 zum Beschleunigen des Fahrzeugs freigegeben.

Für den Fall, dass die Erwartungskennlinie, die anhand der aktuellen Fahrzeuggeschwindigkeit 113 ermittelt wird, die untere Grenzlinie 111 innerhalb der Toleranzzeit 105 schneidet, wird ein zweiter Kontrollbefehl 319 zum Verzögern des Fahrzeugs freigegeben.

Es kann vorgesehen sein, dass für den Fall, dass während einer Bremsung ein Bremspedalwert in einem vorgegebenen Zeitfenster in der Zukunft gegen einen Wert "0" geht bzw. das Bremspedal gelöst wird, und nach der Bremsung eine Beschleunigung vorgesehen ist, ein bzgl. eines vorgesehenen Bremspedalverlaufs vorzeitiges Lösen des Bremspedals durchgeführt wird. Dabei kann das Bremspedal bzw. eine entsprechende Bremse gelöst werden, sobald eine aktuelle Geschwindigkeit des Fahrzeugs kleiner ist als ein Wert der oberen Grenzlinie 109 vor der Beschleunigung. Entsprechend kann ein Kontrollbefehl zum Beschleunigen vorzeitig, d.h. vor einem gemäß einem vorgegebenen Fahrverlauf vorgesehenen Beschleunigungszeitpunkt bereitgestellt werden, wodurch sogenannte "Unterschwinger" vermieden werden.

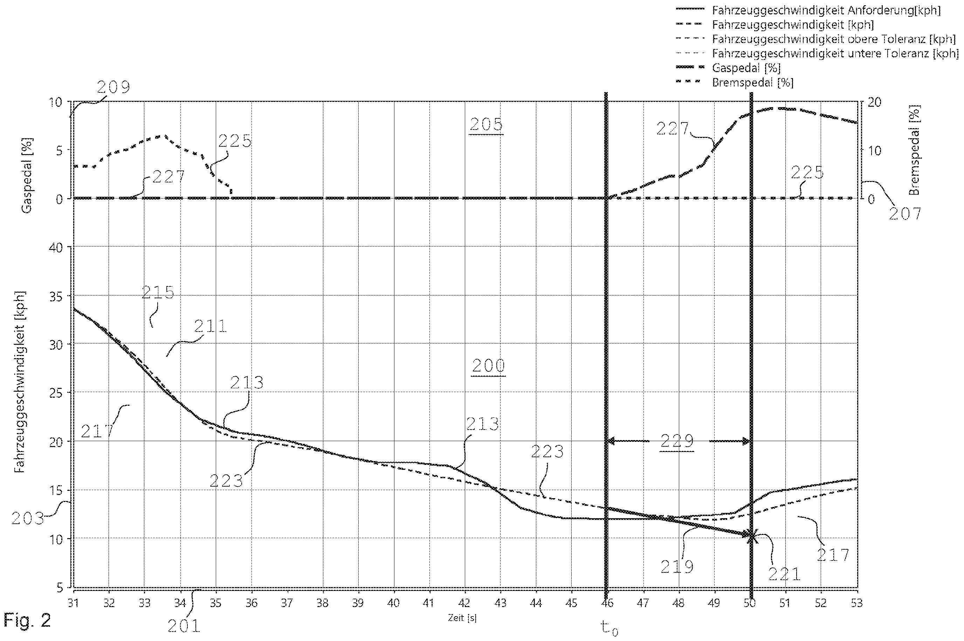

In Figur 2 ist ein Diagramm 200 dargestellt, das sich auf einer Abszisse 201 über die Zeit in [Sekunden] und auf einer ersten Ordinate 203 über eine Fahrzeuggeschwindigkeit in [Km/h] aufspannt.

Ferner ist in Figur 2 ein Diagramm 205 dargestellt, das sich über die Abszisse 201, auf einer zweiten Ordinate 207 über eine Bremspedalstellung in [%] und auf einer dritten Ordinate 209 über eine Fahrpedalstellung in [%] aufspannt, dargestellt.

In Diagramm 200 ist ein Toleranzband 211 dargestellt, das annähernd parallel zu einer Zielleistungsverlaufskurve 213 verläuft, die bspw. eine Zielgeschwindigkeitsverlaufskurve sein kann, und durch eine obere Grenzlinie 215 und eine untere Grenzlinie 217 begrenzt wird.

Die Zielleistungsverlaufskurve 213 ist bspw. durch einen Test, insbesondere durch einen Test zum Messen von Fahrzeugemissionen, vorgegeben. Entsprechend sind jeweilige Werte der Zielleistungsverlaufskurve 213 vor und nach einem aktuellen Zeitpunkt t0 bekannt.

Ausgehend von dem aktuellen Zeitpunkt t0 bei 46 Sekunden ist eine Erwartungskennlinie 219 dargestellt, die die untere Grenzlinie 217 an einem Schnittpunkt 221 schneidet. Historische Werte der Erwartungskennlinie 219, die auf realen Werten der Geschwindigkeit des Fahrzeugs in der Vergangenheit basiert, sind vor dem aktuellen Zeitpunkt t0 durch eine Geschwindigkeits-Linie 223 dargestellt. Diese unterscheidet sich je nach Kontrollgenauigkeit mehr oder weniger von der Zielleistungsverlaufskurve 213. Wie im Diagramm 200 dargestellt ist, liegt die Geschwindigkeits-Linie 223 im Zeitraum von 34,5 Sekunden bis 42,7 Sekunden unterhalb oder auf der Zielleistungsverlaufskurve 213 und im Zeitraum von 42,7 Sekunden bis 47,8 Sekunden oberhalb der Zielleistungsverlaufskurve 213.

In Diagramm 205 sind ein Verlauf 225 einer Bremspedalstellung und ein Verlauf einer Fahrpedalstellung 227 dargestellt. Das Bremspedal ist zu Beginne des dargestellten Zeitraums ab 31 Sekunden bis zum Zeitpunkt 35,4 Sekunden unterschiedlich stark betätigt. Danach ist das Bremspedal nicht mehr betätigt. Die Fahrpedalstellung 227 liegt im dargestellten Zeitraum von 31 Sekunden bis 46 Sekunden bei 0% und wird zum Zeitpunkt t0, der bei 46 Sekunden liegt, betätigt. Da vorliegend die Zielleistungsverlaufskurve 213 bis zum Zeitpunkt 34,5 Sekunden abfällt und die Geschwindigkeits-Linie 223 oberhalb der Zielleistungsverlaufskurve 213 liegt, wurde von einem Fahrer des Fahrzeugs in diesem Zeitraum das Bremspedal mit einem Wert oberhalb von 7% betätigt. Zum Zeitpunkt 34,5 Sekunden entspricht die Geschwindigkeits-Linie 223 der Zielleistungsverlaufskurve 213 und der Fahrer nahm die Betätigung des Bremspedals zurück bis zum Zeitpunkt 35,4 Sekunden das Bremspedal komplett gelöst wurde. Ab diesem Zeitpunkt wurde weder das Bremspedal noch das Fahrpedal betätigt und die Geschwindigkeits-Linie 223 nahm bis zum aktuellen Zeitpunkt t0 (46 Sekunden) gleichmäßig ab.

Da ferner die historischen Werte der Erwartungskennlinie 219, wie durch Geschwindigkeits-Linie 223 dargestellt, bis zum Zeitpunkt t0 die untere Grenzlinie 217 nicht geschnitten haben, wurde ein Kontrollbefehl zum Verändern der Fahrpedalstellung 227 nicht freigegeben, so dass sich die Fahrpedalstellung 227 bis zum Zeitpunkt t0 nicht verändert hat.

Innerhalb eines Vorhersagezeitfensters 229, das sich vom Zeitpunkt t0 (46 Sekunden) aus 4 Sekunden in die Zukunft bis zum Zeitpunkt 50 Sekunden erstreckt, wird vorliegend unter Beibehaltung der aktuellen Einstellungen des Fahrzeugs die Erwartungskennlinie 219 die untere Grenzlinie 217 schneiden, wie durch Schnittpunkt 221 angedeutet. Aufgrund des Auftretens des Schnittpunkts 221 wird ein Kontrollbefehl zum Ändern der Fahrpedalstellung 227 freigegeben, so dass dem Fahrer ein entsprechender Hinweis zum Betätigen des Fahrpedals auf einer Anzeige ausgegeben wird und der Fahrer das Fahrzeug beschleunigt, um das Fahrzeug innerhalb des Toleranzbandes zu halten.

Selbstverständlich kann der Kontrollbefehl auch derart freigegeben werden, dass der Kontrollbefehl an eine Fahrzeugsteuerungsvorrichtung übermittelt wird, die das Fahrpedal entsprechend betätigt bzw. eine Betätigung des Fahrpedals simuliert.

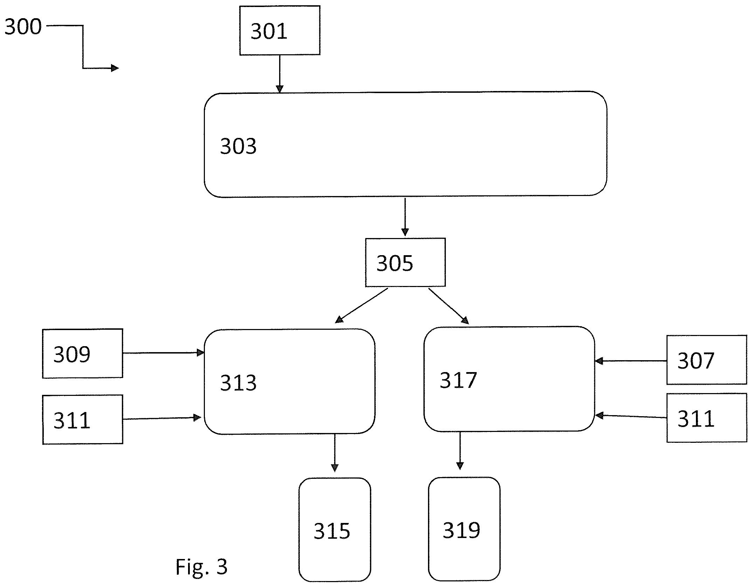

In Figur 3 ist ein detaillierter Ablauf 300 einer Prozedur zur Freigabe eines Kontrollbefehls, wie bspw. dem Kontrollbefehl zur Betätigung des Fahrpedals gemäß Figur 2 dargestellt.

Ausgehend von einem Parameter aktuelle Fahrzeuggeschwindigkeit 301 wird in einem Extrapolationsschritt 303 eine Erwartungskennlinie 305 der zukünftigen Fahrzeuggeschwindigkeit 301 ermittelt. Dazu kann die Erwartungskennlinie 305 über ein Zeitfenster hinweg, ausgehend von einem aktuellen Zeitpunkt t0 bis zu einem vorgegebenen Wert, wie bspw. 0,2 Sekunden in der Vergangenheit, extrapoliert werden. Alternativ kann ein Fahrzeugmodell zur Berechnung der Erwartungskennlinie verwendet werden.

In einem ersten Prüfschritt 313 wird anhand eines unteren Toleranzwerts 307 und einer Zielleistungsverlaufskurve 311 eine untere Grenzlinie eines Toleranzbandes der Zielleistungsverlaufskurve 311 bestimmt. Anhand der in dem Extrapolationsschritt 303 ermittelten Erwartungskennlinie 305 wird überprüft, ob diese innerhalb eines Vorhersagefensters die untere Grenzlinie schneidet. Für den Fall, dass die Erwartungskennlinie 305 die untere Grenzlinie schneidet, wird ein erster Kontrollbefehl 315 zum Beschleunigen des Fahrzeugs freigeschaltet.

In einem zweiten Prüfschritt 317 wird anhand eines oberen Toleranzwerts 307 und einer Zielleistungsverlaufskurve 311 eine obere Grenzlinie eines Toleranzbandes der Zielleistungsverlaufskurve 311 bestimmt. Anhand der in dem Extrapolationsschritt 303 ermittelten Erwartungskennlinie 305 wird überprüft, ob diese innerhalb eines Vorhersagefensters die obere Grenzlinie schneidet. Für den Fall, dass die Erwartungskennlinie 305 die obere Grenzlinie schneidet, wird ein zweiter Kontrollbefehl 319 zum Verzögern des Fahrzeugs freigeschaltet. Da hier in der Regel nur ein Kontrollbefehl freigeschaltet wird, wird überprüft, welcher der beiden Schnittpunkte früher auftritt und der dem früher auftretenden Schnittpunkt entsprechende Kontrollbefehl freigeschaltet.

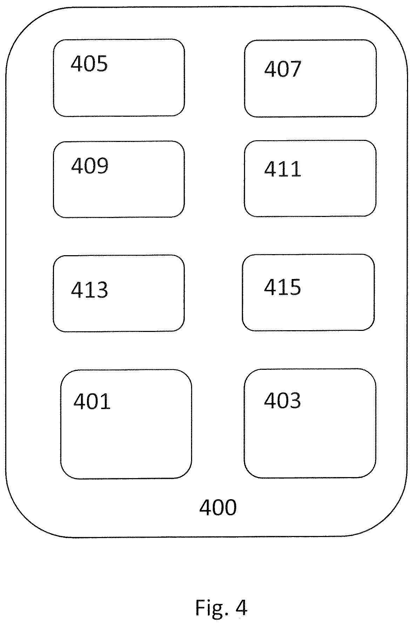

In Figur 4 ist eine mögliche Ausgestaltung der erfindungsgemäßen Kontrollvorrichtung 400 dargestellt.

Die Kontrollvorrichtung 400 dient zum Steuern bzw. Regeln eines Fahrzeugs während eines Testlaufs mittels eines Fahrermodells.

Die Kontrollvorrichtung 400 umfasst eine Recheneinheit 401 und einen Speicher 403, in dem ein Computerprogramm zur Durchführung sämtlicher Schritte des erfindungsgemäßen Verfahrens gespeichert ist.

Das Computerprogramm konfiguriert die Recheneinheit 401 dazu, mittels eines ersten Ermittlungsmoduls 405 eine vorgegebene Zielleistungsverlaufskurve für das Fahrzeug zu ermitteln, d.h. bspw. die Zielleistungsverlaufskurve aus einem Speicher 403, wie bspw. einem Cloudserver zu laden, und ein Toleranzband für die Zielleistungsverlaufskurve mittels eines ersten Bestimmungsmoduls 407 zu bestimmen. Das Toleranzband wird durch eine obere Grenzlinie und eine untere Grenzlinie beschränkt. Die obere Grenzlinie wird durch die Recheneinheit 401 mittels eines zweiten Ermittlungsmoduls 409 anhand eines Verlaufs der Zielleistungsverlaufskurve zuzüglich eines vorgegebenen oberen Toleranzwerts ermittelt, die untere Grenzlinie wird mittels eines dritten Ermittlungsmoduls 411 durch die Recheneinheit 401 anhand des Verlaufs der Zielleistungsverlaufskurve abzüglich eines vorgegebenen unteren Toleranzwerts ermittelt.

Weiterhin wird durch die Recheneinheit 401 mittels eines zweiten Bestimmungsmoduls 413 eine Erwartungskennlinie für eine in der Zukunft zu erwartende Leistung des Fahrzeugs durch Extrapolieren einer Leistungsentwicklung des Fahrzeugs bei einer aktuellen Einstellung des Fahrzeugs für ein vorgegebenes zeitliches Vorhersagefenster bestimmt.

Ein Freigabemodul 415 der Recheneinheit 401 gibt einen durch das Fahrermodell zum Ändern der Einstellung des Fahrzeugs bereitzustellenden Kontrollbefehl für den Fall, dass die Erwartungskennlinie zumindest eine der oberen Grenzlinie und der unteren Grenzlinie des Toleranzbandes innerhalb des zeitlichen Vorhersagfensters schneidet, frei.

**Bezugszeichenliste**

100 Ablauf
101 erster Schritt
103 Zielgeschwindigkeitsvorgabe
105 Toleranzzeit
107 Toleranzgeschwindigkeit
109 obere Grenzlinie
111 untere Grenzlinie
113 Fahrzeuggeschwindigkeit
200 Diagramm
201 Abszisse
203 erste Ordinate
205 Diagramm
207 zweite Ordinate
209 dritte Ordinate

| 211 | Toleranzband |
|---|---|
| 213 | Zielleistungsverlaufskurve |
| 215 | obere Grenzlinie |
| 217 | untere Grenzlinie |
| 219 | Erwartungskennlinie |
| 221 | Schnittpunkt |
| 223 | Geschwindigkeits-Linie |
| 225 | Bremspedalverlauf |
| 227 | Fahrpedalstellung |
| 229 | Vorhersagezeitfenster |
| 300 | Ablauf |
| 301 | Fahrzeuggeschwindigkeit |
| 303 | Extrapolationsschritt |
| 305 | Erwartungskennlinie |
| 307 | oberer Toleranzwert |
| 309 | unterer Toleranzwert |
| 311 | Zielleistungsverlaufskurve |
| 313 | erster Prüfschritt |
| 315 | erster Kontrollbefehl |
| 317 | zweiter Prüfschritt |
| 319 | zweiter Kontrollbefehl |
| 400 | Kontrollvorrichtung |
| 401 | Recheneinheit |
| 403 | Speicher |
| 405 | erstes Ermittlungsmodul |
| 407 | erstes Bestimmungsmodul |
| 409 | zweites Ermittlungsmodul |
| 411 | drittes Ermittlungsmodul |
| 413 | zweites Bestimmungsmodul |
| 415 | Freigabemodul |

**Patentansprüche**

1. Verfahren zum Betreiben eines Fahrermodells zum Kontrollieren eines Fahrzeugs auf einem Prüfstand, wobei das Verfahren die folgenden Schritte umfasst:

   a) Ermitteln einer vorgegebenen Zielleistungsverlaufskurve (213, 311) für das Fahrzeug, welche sich zeitlich ändert, aus einem abzufahrenden Testzyklus,
   b) Bestimmen eines Toleranzbandes (211) für die Zielleistungsverlaufskurve (213, 311), wobei

   das Toleranzband (211) durch eine obere Grenzlinie (109, 215) und eine untere Grenzlinie (111, 217) beschränkt wird, wobei die obere Grenzlinie (109, 215) anhand eines Verlaufs (225) der Zielleistungsverlaufskurve (213, 311) zuzüglich eines vorgegebenen oberen Toleranzwerts (307) bestimmt wird, und wobei die untere Grenzlinie (111, 217) anhand des Verlaufs (225) der Zielleistungsverlaufskurve (213, 311) abzüglich eines vorgegebenen unteren Toleranzwerts (309) bestimmt wird,

   c) Bestimmen einer Erwartungskennlinie (305) für eine in der Zukunft zu erwartende Leistung des Fahrzeugs durch Extrapolieren (303) einer Leistungsentwicklung des Fahrzeugs bei einer aktuellen Einstellung des Fahrzeugs für ein Vorhersagefenster (229) mit einer vorgegebenen zeitlichen Länge, und
   d) Freigeben eines Kontrollbefehls (315, 319) durch das Fahrermodell zum Ändern einer Einstellung des Fahrzeugs für den Fall, dass die Erwartungskennlinie (305) zumindest eine der oberen Grenzlinie (109, 215) und der unteren Grenzlinie (111, 217) des Toleranzbandes (211) innerhalb des zeitlichen Vorhersagfensters (229) schneidet.

2. Verfahren nach Anspruch 1, **dadurch gekennzeichnet, dass**

   das Ändern der Einstellungen des Fahrzeugs für den Fall, dass die Erwartungskennlinie (305) die obere Grenzlinie (109, 215) schneidet, umfasst,
dass ein erster Kontrollbefehl (315) freigegeben wird, der eine Reduktion einer Leistungsabgabe des Fahrzeugs bedingt, und
wobei das Ändern der Einstellungen des Fahrzeugs für den Fall, dass die Erwartungskennlinie (305) die untere Grenzlinie (111, 217) schneidet, umfasst,
dass ein zweiter Kontrollbefehl (319) freigegeben wird, der eine Erhöhung einer Leistungsabgabe des Fahrzeugs bedingt.

3. Verfahren nach Anspruch 2, **dadurch gekennzeichnet, dass**

   der erste Kontrollbefehl (315) ein Bremssystem des Fahrzeugs aktiviert und/oder
   eine Reduktion einer Leistungsabgabe des Antriebs bewirkt, und
   der zweite Kontrollbefehl (319) einen Antrieb des Fahrzeugs zum Bereitstellen einer bzgl. einer aktuellen Leistungsabgabe höheren Leistungsabgabe konfiguriert.

4. Verfahren nach Anspruch 2 oder 3, **dadurch gekennzeichnet, dass**
   für einen Wechsel zwischen dem ersten Kontrollbefehl (315) und dem zweiten Kontrollbefehl (319) ein Fahrpedal und ein Bremspedal des Fahrzeugs sich in einer Nullstellung befinden müssen.

5. Verfahren nach einem der voranstehenden Ansprüche, **dadurch gekennzeichnet, dass**

   für den Fall, dass die Erwartungskennlinie (305) mindestens eine der oberen Grenzlinie (109, 215) und der unteren Grenzlinie (111, 217) schneidet, ein Gewichtungsfaktor ermittelt wird, der sich in Abhängigkeit eines zeitlichen Abstands eines Schnittpunkts (221) der Erwartungskennlinie (305) und der oberen Grenzlinie (109, 215) oder der unteren Grenzlinie (111, 217) zu einem aktuellen Zeitpunkt (t0) ändert, wobei
   anhand des Gewichtungsfaktors eine Prioritätsabfolge jeweiliger zum Freigeben von Kontrollbefehlen (315, 319) zu verwendender Schnittpunkte (221) ermittelt wird.

6. Verfahren nach einem der voranstehenden Ansprüche, **dadurch gekennzeichnet, dass**

   die Erwartungskennlinie (305) anhand von historischen Leistungsdaten des Fahrzeugs in einem vorgegebenen Zeitfenster ausgehend von einem aktuellen Zeitpunkt (t0) bestimmt wird, und wobei
   die Erwartungskennlinie (305) unter der Annahme, dass eine Leistungsabgabe und/oder ein Wert einer Beschleunigung des Fahrzeugs in dem Vorhersagefenster konstant bleibt, bestimmt wird.

7. Verfahren nach einem der voranstehenden Ansprüche, **dadurch gekennzeichnet, dass**

   das Vorhersagefenster (229) kontinuierlich aktualisiert wird, wobei
   innerhalb des Vorhersagefensters (229) in einem ersten Prüfschritt (313) kontinuierlich geprüft wird, ob die Erwartungskennlinie (305) die obere Grenzlinie (109, 215) schneidet und in einem zweiten Prüfschritt (317) kontinuierlich geprüft wird, ob die Erwartungskennlinie (209, 305) die untere Grenzlinie (111, 217) schneidet.

8. Verfahren nach Anspruch 7, **dadurch gekennzeichnet, dass**

   in dem ersten Prüfschritt (313) zusätzlich geprüft wird, ob zukünftige durch die Zielleistungsverlaufskurve (213, 311) vorgegebene Leistungsanforderungen innerhalb des Vorhersagefensters (229) sich kontinuierlich einem Nullwert nähern, und
   für den Fall, dass sich die zukünftigen durch die Zielleistungsverlaufskurve (213, 311), vorgegebenen Leistungsanforderungen innerhalb des Vorhersagefensters (229) kontinuierlich dem Nullwert nähern, ein Kontrollbefehl (315, 319) freigegeben wird, der das Fahrzeug gemäß einem vorgegebenen Prozedere zum Stillstand bringt.

9. Verfahren nach Anspruch 7 oder 8, **dadurch gekennzeichnet, dass**
   das Vorhersagefenster eine dynamische zeitliche Länge hat.

10. Kontrollvorrichtung (400) zum Steuern eines Fahrzeugs während eines Testlaufs mittels eines Fahrermodells, wobei die Kontrollvorrichtung (400) mindestens eine Recheneinheit (401) umfasst, und die mindestens eine Recheneinheit (401) mindestens umfasst:

ein erstes Ermittlungsmodul (405) zum Ermitteln einer vorgegebene Zielleistungsverlaufskurve (213, 311) welche sich zeitlich ändert, aus einem abzufahrenden Testzyklus für das Fahrzeug,

ein erstes Bestimmungsmodul (407) zum Bestimmen eines Toleranzbandes (211) für die Zielleistungsverlaufskurve (213, 311), wobei

das Toleranzband (211) durch eine obere Grenzlinie (109, 215) und eine untere Grenzlinie (111, 217) beschränkt wird,

ein zweites Ermittlungsmodul (409) zum Ermitteln der oberen Grenzlinie (109, 215) anhand eines Verlaufs der Zielleistungsverlaufskurve (213, 311) zuzüglich eines vorgegebenen oberen Toleranzwerts (307),

ein drittes Ermittlungsmodul (411) zum Ermitteln der unteren Grenzlinie anhand des Verlaufs der Zielleistungsverlaufskurve (213, 311) abzüglich eines vorgegebenen unteren Toleranzwerts (309),

ein zweites Bestimmungsmodul (413) zum Bestimmen einer Erwartungskennlinie (305) für eine in der Zukunft zu erwartende Leistung des Fahrzeugs durch Extrapolieren (303) einer Leistungsentwicklung des Fahrzeugs bei einer aktuellen Einstellung des Fahrzeugs für ein vorgegebenes zeitliches Vorhersagefenster (229), und

ein Freigabemodul (415) zum Freigeben eines durch das Fahrermodell zum Ändern der Einstellung des Fahrzeugs bereitzustellenden Kontrollbefehls (315, 319), für den Fall, dass die Erwartungskennlinie (219, 305) zumindest eine der oberen Grenzlinie (109, 215) und der unteren Grenzlinie (111, 217) des Toleranzbandes (211) innerhalb des zeitlichen Vorhersagfensters (229) schneidet.

11. Verwendung einer Kontrollvorrichtung 400 nach Anspruch 10 zur Durchführung eines Testlaufs für ein Fahrzeug.

12. Computerprogrammprodukt umfassend Programmcodemittel zum Durchführen aller Schritte gemäß der Ansprüche 1 bis 9, wenn das Programm auf einem Computer ausgeführt wird.

**Claims**

1. Method for operating a driver model for controlling a vehicle on a test bench, wherein the method comprises the following steps:

   a) ascertaining a specified target power curve (213, 311) that changes with time for the vehicle from a test cycle to be run,
   b) determining a tolerance range (211) for the target power curve (213, 311), wherein

   the tolerance range (211) is limited by an upper boundary (109, 215) and a lower boundary (111, 217), wherein the upper boundary (109, 215) is determined based on a course (225) of the target power curve (213, 311) plus a specified upper tolerance value (307), and wherein
   the lower boundary (111, 217) is determined based on the course (225) of the target power curve (213, 311) minus a specified lower tolerance value (309),

   c) determining an expected characteristic curve (305) for a power of the vehicle to be expected in the future by extrapolating (303) a power progression of the vehicle at a current setting of the vehicle for a prediction window (229) of a specified temporal length, and
   d) enabling a control command (315, 319) by means of the driver model for changing a setting of the vehicle for the case where the expected characteristic curve (305) intersects at least one of the upper boundary (109, 215) and the lower boundary (111, 217) of the tolerance range (211) within the temporal prediction window (229).

2. Method according to claim 1, **characterised in that**

   the changing of the settings of the vehicle for the case where the expected characteristic curve (305) intersects the upper boundary (109, 215) comprises
   enabling a first control command (315) which causes a reduction in a power output of the vehicle, and
   wherein the changing of the settings of the vehicle for the case where the expected characteristic curve (305) intersects the lower boundary (111, 217) comprises
   enabling a second control command (319) which causes an increase in a power output of the vehicle.

3. Method according to claim 2, **characterised in that**

   the first control command (315) activates a braking system of the vehicle and/or

prompts a reduction in a power output of the drive, and
the second control command (319) configures a drive of the vehicle to provide a power output that is higher than a current power output.

4. Method according to claim 2 or 3, **characterised in that**
an accelerator pedal and a brake pedal of the vehicle must be in a neutral position for a switch between the first control command (315) and the second control command (319).

5. Method according to any of the preceding claims, **characterised in that**,

for the case where the expected characteristic curve (305) intersects at least one of the upper boundary (109, 215) and the lower boundary (111, 217), a weighting factor is ascertained which changes depending on a time interval of a point of intersection (221) of the expected characteristic curve (305) and the upper boundary (109, 215) or the lower boundary (111, 217) at a current point in time (t0), wherein
a priority sequence of respective points of intersection (221) to be used for enabling control commands (315, 319) is ascertained based on the weighting factor.

6. Method according to any of the preceding claims, **characterised in that**

the expected characteristic curve (305) is determined based on historical power data of the vehicle within a specified timeframe proceeding from a current point in time (t0), and wherein
the expected characteristic curve (305) is determined based on the assumption that a power output and/or a value of an acceleration of the vehicle remains constant within the prediction window.

7. Method according to any of the preceding claims, **characterised in that**

the prediction window (229) is continuously updated, wherein,
within the prediction window (229), in a first checking step (313), it is continuously checked as to whether the expected characteristic curve (305) intersects the upper boundary (109, 215) and, in a second checking step (317), it is continuously checked as to whether the expected characteristic curve (209, 305) intersects the lower boundary (111, 217).

8. Method according to claim 7, **characterised in that**,

in the first checking step (313), it is additionally checked as to whether future power requirements specified by the target power curve (213, 311) continuously approach a zero value within the prediction window (229), and
for the case where the future power requirements specified by the target power curve (213, 311) continuously approach the zero value within the prediction window (229), a control command (315, 319) is enabled which brings the vehicle to a standstill according to a specified procedure.

9. Method according to claim 7 or 8, **characterised in that**
the prediction window has a dynamic temporal length.

10. Control device (400) for the open-loop control of a vehicle during a test run by means of a driver model, wherein the control device (400) comprises at least one computing unit (401), and the at least one computing unit (401) at least comprises:

a first ascertaining module (405) for ascertaining a specified target power curve (213, 311) that changes with time from a test cycle to be run for the vehicle,
a first determining module (407) for determining a tolerance range (211) for the target power curve (213, 311), wherein
the tolerance range (211) is limited by an upper boundary (109, 215) and a lower boundary (111, 217),
a second ascertaining module (409) for ascertaining the upper boundary (109, 215) based on a course of the target power curve (213, 311) plus a specified upper tolerance value (307),
a third ascertaining module (411) for ascertaining the lower boundary based on the course of the target power curve (213, 311) minus a specified lower tolerance value (309),
a second determining module (413) for determining an expected characteristic curve (305) for a power of the vehicle to be expected in the future by extrapolating (303) a power progression of the vehicle at a current setting of the vehicle for a specified temporal prediction window (229), and
an enabling module (415) for enabling a control command (315, 319) to be provided by the driver model for changing the setting of the vehicle for the case where the expected characteristic curve (219, 305) intersects at least one of the upper boundary (109, 215) and the lower boundary (111, 217) of the tolerance range (211) within the temporal prediction window (229).

11. Use of a control device 400 according to claim 10 for carrying out a test run for a vehicle.

12. Computer program product comprising program coding means for carrying out all steps according to claims 1 to 9 when the program is executed on a computer.

**Revendications**

1. Procédé d'exploitation d'un modèle de conducteur visant à contrôler un véhicule sur un banc d'essai, le procédé comprenant les étapes suivantes :

   a) Détermination d'une courbe de performance cible prédéterminée (213, 311) pour le véhicule, laquelle varie dans le temps, à partir d'un cycle d'essai à effectuer,
   b) Détermination d'une bande de tolérance (211) pour la courbe de performance cible (213, 311),

   la bande de tolérance (211) étant limitée par une ligne de limite supérieure (109, 215) et une ligne de limite inférieure (111, 217), la ligne de limite supérieure (109, 215) étant déterminée à l'aide d'un tracé (225) de la courbe de performance cible (213, 311) plus une valeur de tolérance supérieure prédéterminée (307), et la ligne de limite inférieure (111, 217) étant déterminée à l'aide du tracé (225) de la courbe de performance cible (213, 311) moins une valeur de tolérance inférieure prédéterminée (309),

   c) Détermination d'une courbe caractéristique attendue (305) pour une performance future attendue du véhicule en extrapolant (303) une évolution de la performance du véhicule à un réglage actuel du véhicule pour une fenêtre de prédiction (229) ayant une longueur temporelle prédéterminée, et
   d) Validation d'une commande de contrôle (315, 319) par le modèle de conducteur pour modifier un réglage du véhicule dans le cas où la courbe caractéristique attendue (305) croise au moins l'une de la ligne de limite supérieure (109, 215) et de la ligne de limite inférieure (111, 217) de la bande de tolérance (211) à l'intérieur de la fenêtre de prédiction temporelle (229).

2. Procédé selon la revendication 1, **caractérisé en ce que**

   la modification des réglages du véhicule, dans le cas où la courbe caractéristique attendue (305) croise la ligne de limite supérieure (109, 215) comprend,
   la validation d'une première commande de contrôle (315) qui conditionne une réduction d'une puissance de sortie du véhicule, et
   dans lequel la modification des réglages du véhicule, dans le cas où la courbe caractéristique attendue (305) croise la ligne de limite inférieure (111, 217), comprend
   la validation d'une deuxième commande de contrôle (319) qui conditionne une augmentation d'une puissance de sortie du véhicule.

3. Procédé selon la revendication 2, **caractérisé en ce que**

   la première commande de contrôle (315) active un système de freinage du véhicule et/ou provoque une réduction d'une puissance de sortie de l'entraînement et
   la deuxième commande de contrôle (319) configure un entraînement du véhicule pour fournir une puissance de sortie plus élevée par rapport à une puissance de sortie actuelle.

4. Procédé selon la revendication 2 ou 3, **caractérisé en ce qu'**
   une pédale d'accélérateur et une pédale de frein du véhicule doivent se trouver dans une position zéro pour un changement entre la première commande de contrôle (315) et la deuxième commande de contrôle (319).

5. Procédé selon l'une quelconque des revendications précédentes, **caractérisé en ce que**

dans le cas où la courbe caractéristique attendue (305) croise au moins l'une de la ligne de limite supérieure (109, 215) et de la ligne de limite inférieure (111, 217), on détermine un facteur de pondération qui varie en fonction d'une distance temporelle d'un point d'intersection (221) de la courbe caractéristique attendue (305) et de la ligne de limite supérieure (109, 215) ou de la ligne de limite inférieure (111, 217) à un moment donné (t0), où

une séquence de priorité de points d'intersection respectifs (221) à utiliser pour valider des commandes de contrôle (315, 319) est déterminée à l'aide du facteur de pondération.

6. Procédé selon l'une quelconque des revendications précédentes, **caractérisé en ce que**

la courbe caractéristique attendue (305) est déterminée à partir d'un moment donné (t0) à l'aide de données de performance historiques du véhicule dans une fenêtre temporelle prédéfinie, et dans lequel la courbe caractéristique attendue (305) est déterminée en supposant qu'une sortie de puissance et/ou une valeur d'une accélération du véhicule reste constante dans la fenêtre de prédiction.

7. Procédé selon l'une quelconque des revendications précédentes, **caractérisé en ce que**

la fenêtre de prédiction (229) est actualisée en continu, dans lequel à l'intérieur de la fenêtre de prédiction (229), on vérifie en continu, dans une première étape de vérification (313), si la courbe caractéristique attendue (305) croise la ligne de limite supérieure (109, 215) et, dans une deuxième étape de vérification (317), on vérifie en continu si la courbe caractéristique attendue (209, 305) croise la ligne de limite inférieure (111, 217).

8. Procédé selon la revendication 7, **caractérisé en ce que**,

dans la première étape de vérification (313), on vérifie en outre si de futures exigences de performance prédéterminées par la courbe de performance cible (213, 311) à l'intérieur de la fenêtre de prédiction (229) se rapprochent continuellement d'une valeur zéro, et dans le cas où les exigences de performance future prédéterminées par la courbe de performance cible (213, 311) s'approchent continuellement de la valeur zéro à l'intérieur de la fenêtre de prédiction (229), une commande de contrôle (315, 319) qui arrête le véhicule selon une procédure prédéterminée est validée.

9. Procédé selon la revendication 7 ou 8, **caractérisé en ce que**
la fenêtre de prédiction a une longueur temporelle dynamique.

10. Dispositif de contrôle (400) destiné à contrôler un véhicule pendant une marche d'essai au moyen d'un modèle de conducteur, dans lequel
le dispositif de contrôle (400) comprend au moins une unité de calcul (401), et la au moins une unité de calcul (401) comprend au moins :

un premier module de détermination (405) servant à déterminer une courbe de performance cible (213, 311) prédéterminée qui varie dans le temps, à partir d'un cycle de test à effectuer pour le véhicule, un premier module de détermination (407) pour déterminer une bande de tolérance (211) pour la courbe de performance cible (213, 311), dans lequel la bande de tolérance (211) est limitée par une ligne de limite supérieure (109, 215) et une ligne de limite inférieure (111, 217), un deuxième module de détermination (409) servant à déterminer la ligne de limite supérieure (109, 215) à l'aide d'un tracé de la courbe de performance cible (213, 311), plus une valeur de tolérance supérieure prédéterminée (307), un troisième module de détermination (411) servant à déterminer la ligne de limite inférieure à l'aide du tracé de la courbe de performance cible (213, 311), moins une valeur de tolérance inférieure prédéterminée (309), un deuxième module de détermination (413) permettant de déterminer une courbe caractéristique attendue (305) pour une performance future attendue du véhicule en extrapolant (303) une évolution de la performance du véhicule à un réglage actuel du véhicule pour une fenêtre de prédiction (229) ayant une fenêtre de prévision temporelle déterminée, et un module de validation (415) permettant de valider une commande de contrôle (315, 319) à fournir par le modèle de conducteur pour changer le réglage du véhicule, dans le cas où la courbe caractéristique attendue (219, 305) croise au moins l'une de la ligne de limite supérieure (109, 215) et de la ligne de limite inférieure (111, 217) de la bande de tolérance (211) à l'intérieur de la fenêtre de prédiction temporelle (229)..

11. Utilisation d'un dispositif de commande 400 selon la revendication 10 pour réaliser un essai pour un véhicule.

12. Produit de programme informatique comprenant des moyens de codage de programme pour exécuter toutes les étapes selon les revendications 1 à 9 lorsque le programme est exécuté sur un ordinateur.

Fig. 1

Fig. 2

EP 3 983 779 B1

17

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013095237 A1
- WO 2013095242 A1
- EP 2420423 A1